(19) **Europäisches Patentamt / European Patent Office / Office européen des brevets**

(11) **EP 2 413 571 B1**

(12) **EUROPEAN PATENT SPECIFICATION**

(45) Date of publication and mention
of the grant of the patent:
**10.10.2012 Bulletin 2012/41**

(51) Int Cl.:
***H04M 1/02*** (2006.01)

(21) Application number: **10171308.9**

(22) Date of filing: **29.07.2010**

(54) **Slide and offset pivot display for an electronic mobile device**

Verschieb- und versetzbare Pivot-Anzeige für eine mobile elektronische Vorrichtung

Affichage de pivot décalé et coulissant pour dispositif mobile électronique

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**01.02.2012 Bulletin 2012/05**

(73) Proprietor: **Research In Motion Limited
Waterloo, ON N2L 3W8 (CA)**

(72) Inventor: **Pegg, Albert
Waterloo Ontario N2L 3W8 (CA)**

(74) Representative: **Phillips, Emily Elizabeth et al
Kilburn & Strode LLP
20 Red Lion Street
London WC1R 4PJ (GB)**

(56) References cited:
**EP-A2- 1 914 962        EP-A2- 1 926 291
WO-A1-2008/108594    WO-A1-2010/024086
US-A1- 2002 006 813    US-A1- 2007 139 877
US-A1- 2008 250 826    US-A1- 2009 036 179**

Printed by Jouve, 75001 PARIS (FR)

## Description

BACKGROUND OF THE DISCLOSURE

The present disclosure relates generally to electronic mobile devices, and more particularly to electronic mobile devices including slide and pivot mechanisms that facilitate motion of a display relative to a base housing.

Some types of electronic mobile devices, such as cellular phones and the like, include slidable displays for various reasons, such as revealing key assemblies that are manipulated to control device operation. These displays, in some cases, are also pivotable to provide a landscape viewing configuration that is more convenient for certain activities, such as viewing digital videos.

However, electronic mobile devices are not designed to move directly from the initial position to a landscape viewing configuration because, in some cases, such a motion can obscure part of the key assembly behind the display. Furthermore, in some cases, such a motion can also leave the display extending away from one side of the key assembly, and holding a device in such a configuration may be uncomfortable and awkward. As such, electronic mobile devices are typically first slid to an intermediate configuration before pivoting to a landscape configuration, which can be time-consuming for a device user.

US patent application publication no. 2008250826 describes a locking device for a sliding/swing type mobile terminal. The terminal includes a body housing and a sliding housing which slides on the body housing and swinging to open and close. The locking device includes a sliding member connected to the sliding housing while enabling the sliding housing to slide, a swing member which assembles the sliding member while enabling the sliding member to swing, and a locking unit which includes the sliding member and the swing member, the locking unit which prevents the sliding housing from swinging while sliding and from sliding while swinging in a state before sliding.

European patent application publication no. 1914962 describes a sliding type mobile terminal in which a sliding mechanism is provided to couple slidably a first housing having on its surface a vertically long liquid crystal display part long in the vertical direction to a second housing having on its surface an operating part. This slide mechanism includes a rail part which is mounted on the surface of the second housing in a manner of extending in the vertical direction and is configured such that when the first housing has slidingly moved by means of the slide mechanism to the upper end side of the second housing, the operating part of the second housing will appear. Further, by means of the cam mechanism (support mechanism), the first housing is supported relative to the second housing in a switchable manner between the vertically long state and the horizontally long state. While maintaining overall compactness, the first housing is supported stably to make it possible to slidingly move and to switch between the vertically long state and the horizontally long state, and when the first housing is placed in the horizontally long state, operation under the normal key arrangement is made possible.

European patent application publication no. 1926291 describes a sliding/swing module for use in a mobile terminal having a first housing and a facing second housing coupled to the first housing, the sliding/swing module including a fixed member mounted on the first housing; and a movable member mounted on the second housing and coupled to the fixed member, the movable member being movable in a linear reciprocating manner or in a rotational manner while facing the fixed member.

International patent application publication no. WO 2010024086 describes a slide mechanism comprising a slide portion which is provided between a first housing and a second housing that are arranged with a face of each housing facing each other such that the second housing can move relative to the first housing on the face of the first housing from a basic position, and which extends in a predetermined linear moving direction on the face of the second housing, a slit having an enlarged width part formed at a position becoming a predetermined center of rotation above the slide portion, and a pivotal shaft which projects from the side of the face of the first housing toward the second housing and which has a rotation regulating portion that is inserted rotatably in the enlarged width part of the slit at the basic position, can advance or retract in the above moving direction in the slide portion, and is regulated in the rotation thereof.

US patent application publication no. 2009036179 describes a portable electronic device that includes a main body, a cap body and a hinge assembly. The cap body is movably attached to the main body, and the hinge assembly is disposed between the main body and the cap body. The hinge assembly includes a sliding portion and a rotating portion connected to each other. When the cap body and the main body are totally overlapped, the cap body is selectively to rotate or to slide with respect to the main body over the hinge assembly

International patent application publication no. WO 2008108594 describes a hinge apparatus for slide and swing includes a lower plate having a lower slot formed in one direction, a bushing rotatable while sliding along the lower slot, and a swing plate coupled to the bushing for performing slide and rotation movements along with the bushing. The bushing includes a guide tube movable along the lower slot while the guide tube is inserted through the lower slot. The hinge apparatus for slide and swing further includes an upper plate disposed on the lower plate, the upper plate having an upper slot formed substantially parallel to the lower slot, and the bushing includes a lower protruding tube movable along the upper slot while the lower protruding tube is inserted through the upper slot.

The invention is directed to the electronic mobile device of claim 1. Advantageous embodiments are to be found in the subclaims.

BRIEF DESCRIPTION OF THE DRAWINGS

Fig. 1 is a perspective view of an electronic mobile device incorporating a slide and offset pivot display;

Fig. 2 is a front view of the electronic mobile device of Fig. 1 with the display in a compact operating configuration;

Fig. 3 is a front view of the electronic mobile device of Fig. 1 with the display in a landscape operating configuration;

Fig. 4 is a front view of the electronic mobile device of Fig. 1 with the display in a portrait operating configuration;

Fig. 5 is an exploded perspective view of the electronic mobile device of Fig. 1;

Figs. 6A-6E are front views of the electronic mobile device of Fig. 1 illustrating steps for moving the display from the compact operating configuration to the landscape operating configuration;

Fig. 7 is an exploded perspective view of a second embodiment of an electronic mobile device incorporating a slide and offset pivot display;

Figs. 8A-8C are front views of the electronic mobile device of Fig. 7 with the display in a compact operating configuration, a landscape operating configuration, and a portrait operating configuration, respectively; and

Fig. 9 is a block diagram of communication elements and subsystems of the electronic mobile devices of Figs. 1 and 7.

DETAILED DESCRIPTION OF THE DRAWINGS

According to some embodiments, an electronic mobile device comprises a base housing and a movable housing movably supported by the base housing. The movable housing includes a user interface device, and the user interface device defines an interface plane, a longitudinal plane substantially perpendicular to the interface plane and bisecting the user interface device, and a transverse plane substantially perpendicular to the interface plane and the longitudinal plane and bisecting the user interface device. The movable housing is operable in a first operating configuration, and the movable housing is translatable relative to the base housing along the longitudinal plane to move to and from a second operating configuration. The movable housing is also pivotable relative to the base housing about a pivot axis to move to and from a third operating configuration. The pivot axis is offset from and substantially parallel to both the longitudinal plane and the transverse plane.

In some embodiments, the electronic mobile device further comprises a key assembly supported by the base housing, the user interface device is a display, and a portion of the display is disposed between the base housing and the key assembly and thereby obscured in the first operating configuration.

In some embodiments, the portion of the display is inoperable in the first operating configuration.

In some embodiments, the pivot axis is offset from the longitudinal plane by a transverse offset distance and from the transverse plane by a longitudinal offset distance, and the transverse offset distance and the longitudinal offset distance are substantially equal.

In some embodiments, the display has a width substantially perpendicular to the longitudinal plane, the key assembly has a proximal edge nearest the pivot axis, a distance between the proximal edge and the transverse plane is a key assembly offset distance, and the transverse offset distance and the longitudinal offset distance are given by the inequality:

$$d_s \geq \frac{w}{4} - \frac{d_k}{2}$$

where $d_s$ is the transverse offset distance and the longitudinal offset distance, w is the width of the display, and $d_k$ is the key assembly offset distance.

In some embodiments, the electronic mobile device further comprises a biasing mechanism biasing the movable housing toward the second operating configuration.

In some embodiments, the movable housing translates over a first range of motion and a second range of motion when moving between the first operating configuration and the second operating configuration. The biasing mechanism biases the movable housing toward the first operating configuration in the first range of motion and toward the second operating configuration in the second range of motion.

In some embodiments, the electronic mobile device further comprises a guide mechanism permitting the movable housing to translate relative to the base housing from the first operating configuration to the second operating configuration and vice versa and to pivot relative to the base housing from the first operating configuration to the third operating configuration and vice versa. The guide mechanism also prevents the movable housing from moving directly from the second operating configuration to the third operating configuration and vice versa.

In some embodiments, the guide mechanism includes a slot defined by the base housing and a post supported by the movable housing. The post moves within the slot as the movable housing translates and pivots relative to the base housing.

In some embodiments, the slot includes a linear portion in which the post moves as the movable housing translates relative to the base housing and an arcuate portion in which the post moves as the movable housing pivots relative to the base housing.

In some embodiments, the electronic mobile device further comprises a pivot mechanism facilitating pivoting of the movable housing about the pivot axis. The electronic mobile device further comprises a slide mechanism facilitating translation of the movable housing relative to the base housing along the longitudinal plane. The slide mechanism includes a slide recess defined by the base housing and a slider moving in the slide recess as the movable housing translates relative to the base housing. The slider includes a slider recess that houses the pivot mechanism.

In some embodiments, the movable housing is pivoted by 90 degrees in the third operating configuration relative to the first operating configuration and the second operating configuration.

In some embodiments, the electronic mobile device further comprises a key assembly supported by the base housing, the user interface device is a display, and a portion of the display is disposed between the base housing and the key assembly and thereby obscured in the first operating configuration.

According to some embodiments, an electronic mobile device comprises a base housing supporting a slide mechanism and a pivot mechanism. The electronic mobile device further comprises a movable housing connected to the slide mechanism and the pivot mechanism such that the movable housing is movably supported by the base housing. The movable housing includes a user interface device that defines an interface plane, a longitudinal plane that bisects the user interface device and is substantially perpendicular to the interface plane, and a transverse plane that bisects the user interface device and is substantially perpendicular to the interface plane and the longitudinal plane. The movable housing is operable in a first operating configuration, and the movable housing is translatable relative to the base housing along the longitudinal plane to move to and from a second operating configuration. The movable housing is also pivotable relative to the base housing about a pivot axis to move to and from a third operating configuration. The pivot axis is offset from and substantially parallel to both the longitudinal plane and the transverse plane.

In some embodiments, the user interface device is a display.

In some embodiments, the electronic mobile device further comprises a key assembly supported by the base housing, and at least a portion of the display is disposed between the base housing and the key assembly and thereby obscured in the first operating configuration. According to some embodiments, an electronic mobile device comprises a base housing supporting a slide mechanism and a pivot mechanism. The electronic mobile device further comprises a movable housing connected to the slide mechanism and the pivot mechanism such that the movable housing is movably supported by the base housing. The movable housing includes a display that defines a display plane, a longitudinal plane that bisects the display and is substantially perpendicular to the display plane, and a transverse plane that bisects the display and is substantially perpendicular to the display plane and the longitudinal plane. The movable housing is operable in a compact operating configuration, and the movable housing is translatable relative to the base housing along the longitudinal plane to move to and from a portrait operating configuration. The movable housing is also pivotable relative to the base housing about a pivot axis to move to and from a landscape operating configuration. The pivot axis is offset from and substantially parallel to both the longitudinal plane and the transverse plane.

In some embodiments, the electronic mobile device further comprises a key assembly supported by the base housing, and at least a portion of the display is disposed between the base housing and the key assembly and thereby obscured in the compact operating configuration.

In some embodiments, the pivot axis is offset from the longitudinal plane by a transverse offset distance and the transverse plane by a longitudinal offset distance, and the transverse offset distance and the longitudinal offset distance are substantially equal.

In some embodiments, the electronic mobile device further comprises a guide mechanism permitting the movable housing to translate relative to the base housing from the compact operating configuration to the portrait operating configuration and vice versa and to pivot relative to the base housing from the compact operating configuration to the landscape operating configuration and vice versa. The guide mechanism also prevents the movable housing from moving directly from the portrait operating configuration to the landscape operating configuration and vice versa.

The teachings of the present disclosure relate generally to electronic mobile devices, *e.g.*, mobile communication devices such as pagers, cellular phones, global positioning system (GPS) navigation devices and other satellite navigation devices, smart phones, wireless organizers, wireless personal digital assistants (PDA), and tablet computers. The electronic mobile devices could be devices without wireless communication capabilities such as PDAs, electronic gaming devices, digital photograph albums or picture frames, digital cameras, or digital video recorders. It is also possible that the teachings of the present disclosure could be applied to electronic devices other than handheld electronic devices, *e.g.*, notebook computers. In any case, these examples are intended to be non-limiting.

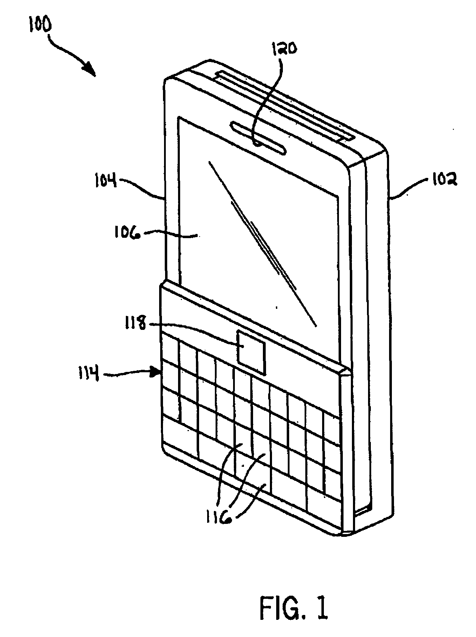

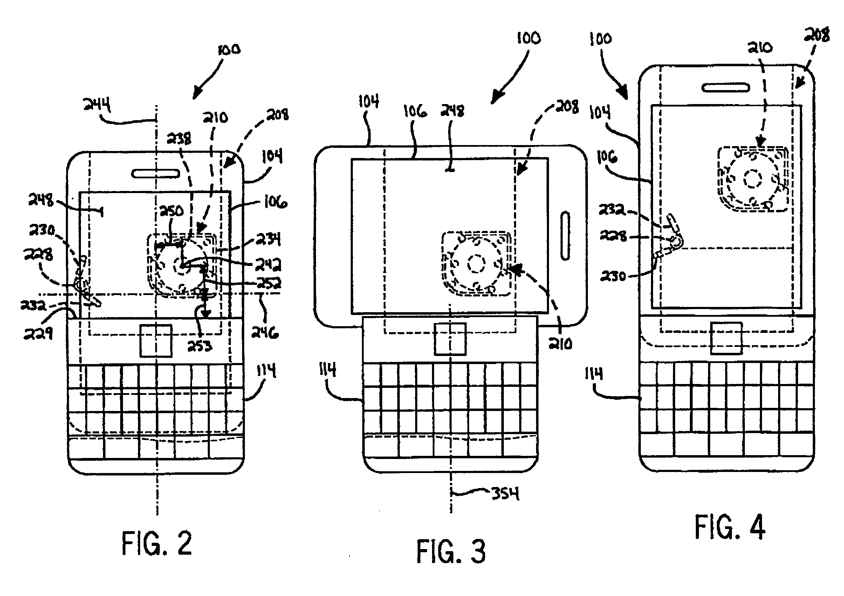

Referring now to Figs. 1-6, an electronic mobile device 100 includes a base housing 102 that supports a movable housing 104. The movable housing 104 includes a user interface device, *e.g.*, a display 106. Motion of the movable housing 104 is facilitated by a slide mechanism 208 (Fig. 2) and an offset pivot mechanism 210 that permits the movable housing 104 to move directly from a compact operating configuration (Fig. 2) to a landscape operating configuration (Fig. 3). In the following paragraphs, the base housing 102 and the movable housing 104 are first generally described. Thereafter, additional details of the slide mechanism 208, the offset pivot mechanism 210, the motion of the movable housing 104, and communication elements and subsystems of the device 100 are provided.

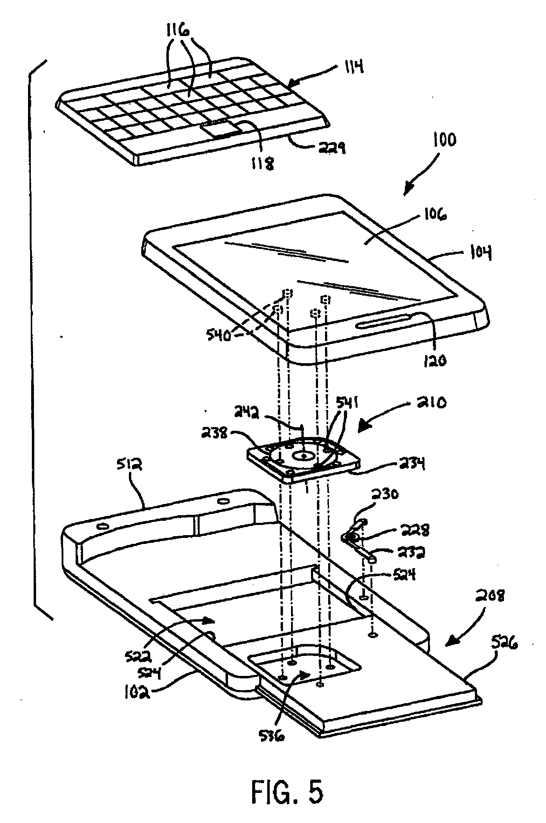

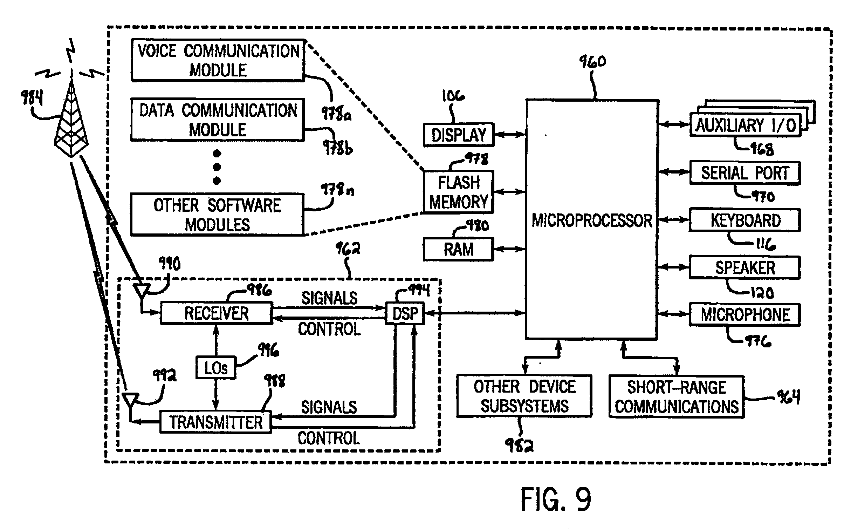

Referring specifically to Figs. 1 and 5, the base housing 102 is a generally flat and rectangular component that houses communication elements and subsystems such as those described below in connection with Fig. 9. In some embodiments, the base housing 102 also supports user-operable components (not shown) on its rectangular periphery, such as volume control keys, shortcut keys, mute keys, data/power ports, earphone jacks, and the like, that may be manipulated by a user to control operation of the electronic mobile device 100. A lower end of the rectangular body of the base housing 102 connects to a mounting platform 512 that extends above the movable housing 104 and supports a key assembly 114.

The key assembly 114 includes a plurality of keys 116 that define a common keypad layout, such as a QWERTY layout, a QWERTZ layout, an AZERTY layout, a DVORAK layout, or the like. In some embodiments, the key assembly 114 also includes additional user-operable components, such as a track pad 118, a track ball (not shown), a menu button (not shown), an escape button (not shown), and the like. In any case, the key assembly 114 may be manipulated by a user to control operation of the electronic mobile device 100.

Still referring to Figs. 1 and 5, the movable housing 104 is a generally flat component that includes a display 106, such as a liquid crystal display (LCD), that interacts with the communication elements and subsystems described in connection with Fig. 9 to provide visual information to a user. In some embodiments, the display 106 could be a touch-responsive LCD panel such that the movable housing 104 could also serve as an input device. In some embodiments, the movable housing 104 also supports a speaker 120 that interacts with the communication elements and subsystems described in connection with Fig. 9 to provide audible information to a user. Furthermore, in some embodiments the movable housing 104 also supports user-operable components (not shown) on its rectangular periphery, such as volume control keys, short cut keys, mute keys, data/power ports, earphone jacks, and the like, that may be manipulated by a user to control operation of the electronic mobile device 100.

Referring now to Figs. 2-5, the movable housing 104 is operable in a first or compact operating configuration (Fig. 2) in which a portion of the display 106 is obscured by the key assembly 114. In some embodiments, the portion of the display 106 obscured by the key assembly 114 is inoperable in the compact operating configuration to conserve power. In any case, the compact operating configuration may be useful for viewing relatively simple information, such as SMS messages or e-mail messages, and for storing the device 100. The movable housing 104 is also operable in other configurations facilitated by the slide mechanism 208 and the pivot mechanism 210 as described below.

The slide mechanism 208 includes a slide recess 522 (Fig. 5) defined by the front surface of the base housing 102. The front surface of the base housing 102 also defines two guide rails 524 that engage a slider 526 disposed within the slide recess 522. The guide rails 524 constrain the slider 526 to move back and forth along a linear path within the slide recess 522. The slider 526 supports the movable housing 104 (indirectly through the pivot mechanism 210), and as such, the movable housing 104 is translatable along the linear path defined by the guide rails 524. This permits the movable housing 104 to be moved from the compact operating configuration (Fig. 2) to a second or portrait operating configuration (Fig. 4) and vice versa. In the portrait operating configuration, the entire display 106 is positioned above an uppermost or proximal edge 229 (Fig. 2) of the key assembly 114, and as such the entire display 106 is visible. For the above reasons, the portrait operating configuration may be useful for viewing a relatively large amount of information or relatively large images, such as portrait-oriented digital photographs or the like.

In some embodiments, the slide mechanism 208 also includes a biasing mechanism (e.g., an over-center spring 228) that biases the movable housing 104 (through the slider 526) toward the compact operating configuration over a first range of motion and toward the portrait operating configuration over a second range of motion. In the embodiments shown in the figures, the over-center spring 228 includes a first leg 230 that pivotally connects to the base housing 102 and a second leg 232 that pivotally connects to the slider 526. When the movable housing 104 is in the compact operating configuration, the spring 228 tends to uncoil in a manner that forces the first and second legs 230 and 232 apart, thereby biasing the movable housing 104 toward the compact operating configuration. The spring 228 continues to bias the movable housing 104 toward the compact operating configuration as the movable housing 104 moves toward the portrait operating configuration. However, once the ends of the legs 230 and 232 pass each other, the tendency of the first and second legs 230 and 232 to move apart biases the movable housing 104 toward the portrait operating configuration.

Still referring to Figs. 2-5, the pivot mechanism 210 generally has a structure that is common to such components. That is, the pivot mechanism 210 includes a frame 234 that is fixedly housed within a slider recess 536 (Fig. 5) defined by the front surface of the slider 526. In some embodiments, the frame 234 is secured to the slider 526 via threaded fasteners (not shown), although other means may alternatively be used. In any case, the frame 234 rotatably supports a disk or rotator 238 that fixedly connects to the movable housing 104 via, e.g., posts 540 (Fig. 5) extending from the rear surface of the movable housing 104 into holes 541 defined by the surface of the rotator 238. In some embodiments, the movable housing 104 and the rotator 238 are connected using other means, such as threaded fasteners (not shown). Regardless of the type of connection that is used, the rotator 238 permits the movable housing 104 to pivot relative to the base housing 102 about a pivot axis 242 that extends through the center of the rotator 238. As such, the movable housing 104 is pivotable from the compact operating configuration (Fig. 2) to a third or landscape operating configuration (Fig. 3) and vice versa. The movable housing 104 is pivoted by 90 degrees in the landscape operating configuration relative to the compact operating configuration, and therefore the landscape operating configuration may be useful for viewing relatively large amounts of information or relatively large images, such as digital videos or the like.

In addition to the components described above, in some embodiments the pivot mechanism 210 further includes a biasing mechanism (not shown) that biases the movable housing 104 (through the rotator 238) toward the compact operating configuration over a first range of angular motion and toward the landscape operating configuration over a second range of angular motion. Such biasing mechanisms are commonly associated with pivot mechanisms and, in some embodiments, include compression springs supported by the frame 234 that engage cam surfaces on the rotator 238.

As shown mostly clearly in Fig. 2, the pivot mechanism 210 is positioned so that the pivot axis 242 is offset from the center of the display 106. As used herein, the "center" of the display 106 refers to the intersection of a longitudinal plane 244 and a transverse plane 246 that both bisect the display 106. The longitudinal plane 244 extends in the direction of the longer dimension of the display 106 (*i.e.,* the height dimension), and the transverse plane 246 extends in the direction of the shorter dimension of the display 106 (*i.e.,* the width dimension). In addition, the longitudinal plane 244 and the transverse plane 246 are substantially perpendicular to each other and an interface or display plane 248 extending along the surface of the display 106.

The pivot mechanism 210 is positioned so that the pivot axis 242 is offset from the planes described above for several related reasons. In particular, the pivot axis 242 is offset so that the movable housing 104 can pivot from the compact operating configuration directly to the landscape operating configuration in a manner in which the entire display 106 is visible above the key assembly 114 (*i.e.,* no portions of the display 106 are obscured by the key assembly 114). To this end, the distance between the pivot axis 242 and the longitudinal plane 244, or simply the transverse offset distance 250, is given by the inequality:

$$d_{s1} \geq \frac{w}{2} - d_{s2} - d_k$$

where $d_{st}$ is the transverse offset distance, w is the shorter dimension of the display 106 (*i.e.*, the width dimension), $d_{s2}$ is a longitudinal offset distance 252 (*i.e.,* the distance of the pivot axis 242 above the transverse plane 246), *and* $d_k$ is a key assembly offset distance 253 (*i.e.,* the distance of the proximal edge 229 of the key assembly 114 below the transverse plane 246).

Furthermore, in some embodiments the display 106 is positioned symmetrically relative to the key assembly 114 and the base housing 102 in the landscape operating configuration to provide a "balanced" appearance for the device 100. To this end, the transverse plane 246 of the display 106 aligns with a mid-plane 354 (Fig. 3) of the base housing 102 in the landscape operating configuration. If the mid-plane 354 of the base housing 102 coincides with the longitudinal plane 244 of the display 106 in the compact operating configuration, then:

$$d_{s1} = d_{s2}$$

and the above inequality simplifies to the form:

$$d_{s1} \geq \frac{w}{4} - \frac{d_k}{2}$$

to provide an electronic mobile device 100 with a balanced appearance in which the entire display 106 is visible in the landscape operating configuration.

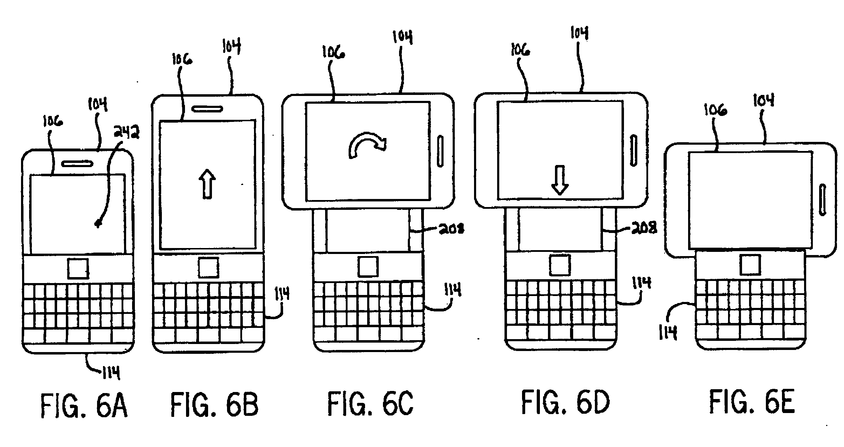

As described above, the movable housing 104 may be moved directly from the compact operating configuration to either the portrait operating configuration or the landscape operating configuration. However and referring to Figs. 6A-6E, in some embodiments the movable housing 104 may also be moved directly from the portrait operating configuration to the landscape operating configuration and vice versa. Specifically, the movable housing 104 may move from the compact operating configuration (Fig. 6A) to the portrait operating configuration (Fig. 6B). While in the portrait operating configuration, the movable housing 104 may pivot clockwise by 90 degrees about the pivot axis 242 (Fig. 6C). The slider 526 may then move toward the key assembly 114 (Fig. 6D) such that the movable housing 104 moves toward the landscape operating configuration (Fig. 6E). The movable housing 104 may then be returned to the compact operating configuration by reversing the previous series of steps or by simply pivoting the movable housing 104 counter-clockwise by 90 degrees about the pivot axis 242.

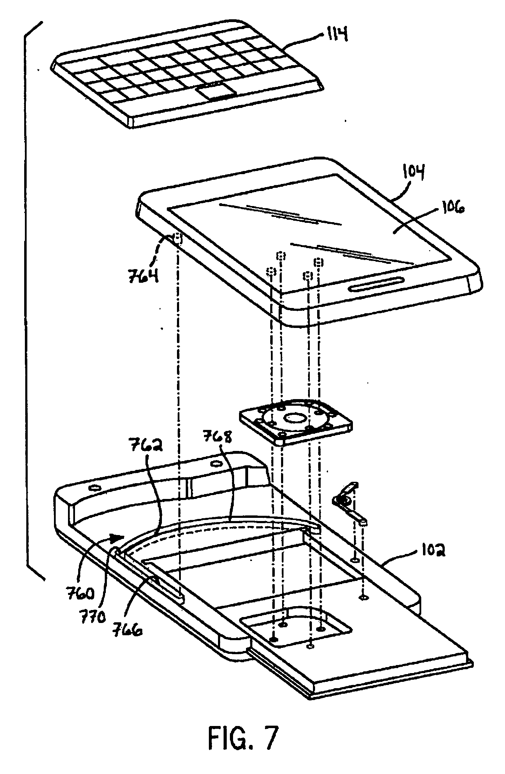

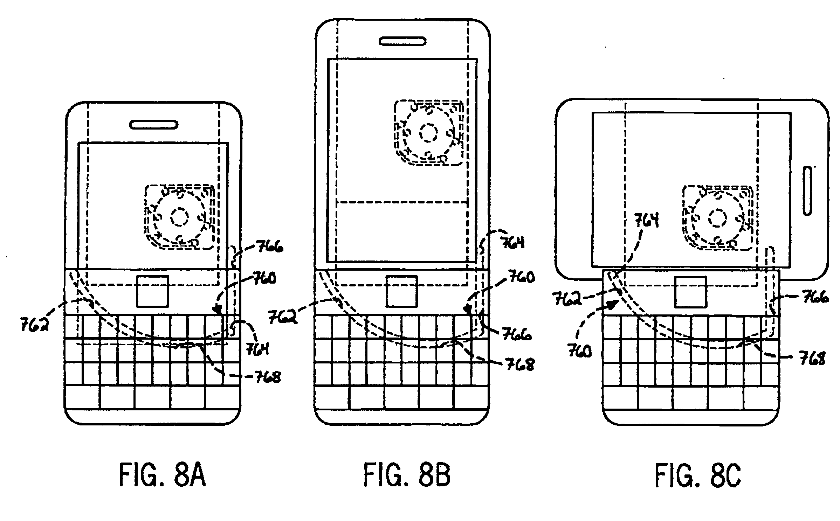

The motion described in the previous paragraph exposes the slide mechanism 208 when the display moves between the portrait operating configuration and the landscape operating configuration (Figs. 6C and 6D). This exposure can be reduced by employing a guide mechanism 760 (Figs. 7 and 8A-8C) that prevents the movable housing 104 from moving directly from the portrait operating configuration to the landscape operating configuration and vice versa. Instead, the guide mechanism 760 permits the movable housing 104 to move directly from the compact operating configuration to either the portrait operating configuration or the landscape operating configuration and vice versa. In the embodiments shown in the figures, the guide mechanism 760 includes a slot 762 defined by the front surface of the base housing 102. The rear surface of the movable housing 104 supports a post 764 that moves within the slot 762 as the movable housing 104 translates and pivots to move to and from the different operating configurations. The post 764 moves through a linear portion 766 of the slot 762 as the movable housing 104 moves to and from the portrait operating configuration, and the post 764 moves through an arcuate portion 768 of the slot 762 as the movable housing 104 pivots to and from the landscape operating configuration. The post 764 is positioned at a transition portion 770 between the linear portion 766 and the arcuate portion 768 when the display is in the compact operating configuration.

The device 100 described above may be modified without departing from the scope of the disclosure. For example, instead of including an over-center spring 228, the biasing mechanism may include a spring-biased cam (not shown) supported by the base housing 102 that engages sloped cam surfaces (not shown) of the slider 526. By engaging one sloped cam surface, the cam biases the slider 526 toward the compact operating configuration, and by engaging the other sloped cam surface, the roller biases the slider 526 toward the portrait operating configuration. Various other modifications and alternatives may also be employed.

From the above description, it should be appreciated that the movable housing 104 is pivotable to a landscape operating configuration directly from a compact operating configuration. Furthermore, the entire display 106 is visible and is symmetrically positioned relative to the base housing 102 in the landscape operating configuration, thereby providing a comfortable holding configuration for a device user.

Referring now to Fig. 9, a block diagram showing the operative connections of the communication elements and subsystems of the electronic mobile device 100 is illustrated. The electronic mobile device 100 includes a processing device 960, a communications subsystem 962, a short-range communications subsystem 964, input/output devices 106, 968, 970, 116, 120, 976, memory devices 978, 980, and various other device subsystems 982. The electronic mobile device 100 is preferably a two-way communication device having voice and data communication capabilities. In addition, the device 100 preferably has the capability to communicate with other computer systems via the internet.

The processing device 960 controls the overall operation of the electronic mobile device 100. Operating system software executed by the processing device 960 is preferably stored in a persistent store, such as the flash memory 978, but may also be stored in other types of memory devices, such as a read only memory (ROM) or similar storage elements. In addition, system software, specific device applications, or parts thereof, may be temporarily loaded into a volatile store, such as the random access memory (RAM) 980. Communication signals received by the electronic mobile device 100 may also be stored to RAM 980.

The processing device 960, in addition to its operating system functions, enables execution of software applications 978a-978n on the device 100. A predetermined set of applications that control basic device operations, such as data and voice communications 978a, 978b may be installed on the device 100 during manufacture. In addition, a personal information manager (PIM) application (not shown) may be installed during manufacture. The PIM is preferably capable of organizing and managing data items, such as e-mail, calendar events, voicemails, appointments, and task items. The PIM application is also preferably capable of sending and receiving data items via a wireless network 984. Preferably, the PIM data items are seamlessly integrated, synchronized and updated via the wireless network 984 with the device user's corresponding data items stored or associated with a host computer system. An example system and method for accomplishing these steps is disclosed in "System and Method for Pushing Information from a Host System to a Mobile Data Communication Device Having A Shared Electronic Address", U.S. Pat. No. 6,219,694, which is owned by the assignee of the present application, and which is incorporated herein by reference.

Communication functions, including data and voice communications, are performed through the communication subsystem 962, and possibly through the short-range communications subsystem 964. The communication subsystem 962 includes a receiver 986, a transmitter 988 and one or more antennas 990, 992. In addition, the communication subsystem 962 also includes a processing module, such as a digital signal processor (DSP) 994, and local oscillators (LOs) 996. The specific design and implementation of the communication subsystem 962 is dependent upon the communication network in which the electronic mobile device 100 is intended to operate. For example, an electronic mobile device 100 may include a communication subsystem 962 designed to operate with the Mobitex™ DataTAC™ or General Packet Radio Service (GPRS) mobile data communication networks and also designed to operate with any of a variety of voice communication networks, such as AMPS, TDMA, CDMA, PCS, GSM, etc. Other types of data and voice networks, both separate and integrated, may also be utilized with the electronic mobile device 100.

Network access requirements vary depending upon the type of communication system. For example, in the Mobitex and DataTAC networks, electronic mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the electronic mobile device 100 may send and receive communication signals over the communication network 984. Signals received by the antenna 990 from the communication network 984 are routed to the receiver 986, which provides for signal amplification, frequency down conversion, filtering, channel selection, *etc.,* and may also provide analog-to-digital conversion. Analog-to-digital conversion of the received signal allows the DSP to perform more complex communication functions, such as demodulation and decoding. In a similar manner, signals to be transmitted to the network 984 are processed (*e.g.*, modulated and encoded) by the DSP 994 and are then provided to the transmitter 988 for digital-to-analog conversion, frequency up conversion, filtering, amplification and transmission to the communication network 984 (or networks) via the antenna 992.

In addition to processing communication signals, the DSP 994 provides for receiver 986 and transmitter 988 control. For example, gains applied to communication signals in the receiver 986 and transmitter 988 may be adaptively controlled through automatic gain control algorithms implemented in the DSP 994.

In a data communication mode, a received signal, such as a text message or web page download, is processed by the communication subsystem 962 and input to the processing device 960. The received signal is then further processed by the processing device 960 for output to the display 106, or alternatively to some other auxiliary I/O device 968. A device user may also compose data items, such as e-mail messages, using the key assembly 114 and/or some other auxiliary I/O device 968, such as the track pad 118, a rocker switch, a thumbwheel, or the like. The composed data items may then be transmitted over the communication network 984 via the communication subsystem 962.

In a voice communication mode, overall operation of the device is substantially similar to the data communication mode, except that received signals are output to the speaker 120, and signals for transmission are generated by a microphone 976. Alternative voice or audio I/O subsystems, such as a voice message recording subsystem, may also be implemented on the device 100. In addition, the display 106 may also be utilized in voice communication mode, for example to display the identity of a calling party, the duration of a voice call, or other voice call related information.

The short-range communications subsystem 964 enables communication between the electronic mobile device 100 and other proximate systems or devices, which need not necessarily be similar devices. For example, the short-range communications subsystem 964 may include an infrared device and associated circuits and components, or a Bluetooth™ communication module to provide for communication with similarly-enabled systems and devices.

The various embodiments presented above are merely examples and are in no way meant to limit the scope of this disclosure. Variations of the embodiments described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and subcombinations would be readily apparent to persons skilled in the art upon review of the present application as a whole. The subject matter described herein and in the recited claims intends to cover and embrace all suitable changes in technology.

## Claims

1. An electronic mobile device, comprising:

    a base housing (102);
    a movable housing (104) movably supported by the base housing (102) and including a display (106), the display (106) defining:

        an interface plane (248);
        a longitudinal plane (244) substantially perpendicular to the interface plane (248) and bisecting the display (106);
        a transverse plane (246) substantially perpendicular to the interface plane (248) and the longitudinal plane (244) and bisecting the display (106);

    a key assembly (114) supported by the base housing (102);
    wherein the movable housing (104) is operable in a first operating configuration, the movable housing (104) is translatable relative to the base housing (102) along the longitudinal plane (244) to move to and from a second operating configuration, and the movable housing (104) is pivotable relative to the base housing (102) about a pivot axis (242) to move to and from a third operating configuration, and the pivot axis (242) is offset from and substantially parallel to both the longitudinal plane (244) and the transverse plane (246);

wherein a portion of the display (106) is adapted to be disposed between the base housing (102) and the key assembly (114) and thereby obscured in the first operating configuration;

wherein the pivot axis (242) is offset from the longitudinal plane (244) by a transverse offset distance (250) and from the transverse plane (246) by a longitudinal offset distance (252), and the transverse offset distance (250) and the longitudinal offset distance (252) are substantially equal;

wherein the display (106) has a width substantially perpendicular to the longitudinal plane (244), the key assembly (114) has a proximal edge (229) nearest the pivot axis (242), a distance between the proximal edge (229) and the transverse plane (246) being a key assembly offset distance (253), and the transverse offset distance (250) and the longitudinal offset distance (252) arc given by the inequality:

$$d_s \geq \frac{w}{4} - \frac{d_k}{2}$$

where $d_s$ is the transverse offset distance (250) and the longitudinal offset distance (252), w is the width of the display, and $d_k$ is the key assembly offset distance (253).

2. The electronic mobile device of claim 1, wherein the portion of the display is inoperable in the first operating configuration.

3. The electronic mobile device of claim 1, further comprising a biasing mechanism (228) adapted to bias the movable housing (104) toward the second operating configuration.

4. The electronic mobile device of claim 3, wherein the movable housing (104) is adapted to translate over a first range of motion and a second range of motion when moving between the first operating configuration and the second operating configuration, and the biasing mechanism (228) is adapted to bias the movable housing (104) toward the first operating configuration in the first range of motion and toward the second operating configuration in the second range of motion.

5. The electronic mobile device of claim 1, further comprising a guide mechanism (760) adapted to permit the movable housing (104) to translate relative to the base housing (102) from the first operating configuration to the second operating configuration and vice versa and to pivot relative to the base housing (102) from the first operating configuration to the third operating configuration and vice versa, the guide mechanism (760) also being adapted to prevent the movable housing (104) from moving directly from the second operating configuration to the third operating configuration and vice versa.

6. The electronic mobile device of claim 5, wherein the guide mechanism (760) includes a slot (762) defined by the base housing (102) and a post (764) supported by the movable housing (104) and adapted to move within the slot (762) as the movable housing (104) translates and pivots relative to the base housing (102).

7. The electronic mobile device of claim 6, wherein the slot (762) includes a linear portion (766) in which the post (764) is adapted to move as the movable housing (104) translates relative to the base housing (102) and an arcuate portion (768) in which the post (764) is adapted to move as the movable housing (104) pivots relative to the base housing (102).

8. The electronic mobile device of claim 1, further comprising:

   a pivot mechanism (210) adapted to facilitate pivoting of the movable housing (104) about the pivot axis (242);
   a slide mechanism (208) adapted to facilitate translation of the movable housing (104) relative to the base housing (102) along the longitudinal plane (244), the slide mechanism (208) including:

      a slide recess (522) defined by the base housing (102); and
      a slider (526) adapted to move in the slide recess (522) as the movable housing (104) translates relative to the base housing (102), the slider (526) including a slider recess (536) that houses the pivot mechanism (210).

9. The electronic mobile device of claim 1, wherein the movable housing (104) is adapted to pivot by 90 degrees in the third operating configuration relative to the first operating configuration and the second operating configuration.

**Patentansprüche**

1. Eine elektronische mobile Vorrichtung, die aufweist:

   ein Basisgehäuse (102);
   ein bewegbares Gehäuse (104), das bewegbar von dem Basisgehäuse (102) getragen wird und eine Anzeige (106) umfasst, wobei die Anzeige (106) definiert:

eine Schnittstellenebene (248);
eine Längsebene (244), die im Wesentlichen senkrecht zu der Schnittstellenebene (248) ist und die Anzeige (106) zweiteilt;
eine Querebene (246), die im Wesentlichen senkrecht zu der Schnittstellenebene (248) und der Längsebene (244) ist und die Anzeige (106) zweiteilt;

eine Tasten-Baugruppe (114), die von dem Basisgehäuse (102) getragen wird;
wobei das bewegbare Gehäuse (104) in einer ersten Betriebskonfiguration betriebsfähig ist, wobei das bewegbare Gehäuse (104) beweglich ist relativ zu dem Basisgehäuse (102) entlang der Längsebene (244), um sich in eine und aus einer zweiten Betriebskonfiguration zu bewegen, und das bewegbare Gehäuse (104) relativ zu dem Basisgehäuse (102) um eine Schwenkachse (242) schwenkbar ist, um sich in eine und aus einer dritten Betriebskonfiguration zu bewegen, und die Schwenkachse (242) versetzt von und im Wesentlichen parallel zu sowohl der Längsebene (244) als auch der Querebene (246) ist;
wobei ein Teil der Anzeige (106) ausgebildet ist, zwischen dem Basisgehäuse (102) und der Tasten-Baugruppe (114) angeordnet zu sein und dadurch in der ersten Betriebskonfiguration verdeckt ist;
wobei die Schwenkachse (242) von der Längsebene (244) um eine Quer-Offset-Distanz (250) versetzt ist und von der Querebene (246) um eine Längs-Offset-Distanz (252), und wobei die Quer-Offset-Distanz (250) und die Längs-Offset-Distanz (252) im Wesentlichen gleich sind;
wobei die Anzeige (106) eine Breite hat, die im Wesentlichen senkrecht zu der Längsebene (244) ist, wobei die Tasten-Baugruppe (114) einen proximalen Rand (229) am nächsten zu der Schwenkachse (242) hat, wobei eine Distanz zwischen dem proximalen Rand (229) und der Querebene (246) eine Tasten-Baugruppe-Offset-Distanz (253) ist, und die Quer-Offset-Distanz (250) und die Längs-Offset-Distanz (252) durch die Ungleichung gegeben werden:

$$d_s \geq \frac{w}{4} - \frac{d_k}{2}$$

wobei $d_s$ die Quer-Offset-Distanz (250) und die Längs-Offset-Distanz (252) ist, w die Breite der Anzeige ist, und $d_k$ die Tasten-Baugruppe-Offset-Distanz (253) ist.

2. Die elektronische mobile Vorrichtung gemäß Anspruch 1, wobei der Teil der Anzeige in der ersten Betriebskonfiguration nicht betriebsfähig ist.

3. Die elektronische mobile Vorrichtung gemäß Anspruch 1, die weiter aufweist einen Biasing-Mechanismus (228), der ausgebildet ist, das bewegbare Gehäuse (104) in die zweite Betriebskonfiguration zu bringen.

4. Die elektronische mobile Vorrichtung gemäß Anspruch 3, wobei das bewegbare Gehäuse (104) ausgebildet ist, über einen ersten Bewegungsbereich und einen zweiten Bewegungsbereich bei einem Bewegen zwischen der ersten Betriebskonfiguration und der zweiten Betriebskonfiguration bewegt zu werden, und der Biasing-Mechanismus (228) ausgebildet ist, das bewegbare Gehäuse (104) in die erste Betriebskonfiguration in dem ersten Bewegungsbereich und in die zweite Betriebskonfiguration in dem zweiten Bewegungsbereich zu bringen.

5. Die elektronische mobile Vorrichtung gemäß Anspruch 1, die weiter aufweist einen Führungsmechanismus (760), der ausgebildet ist, zu ermöglichen, dass sich das bewegbare Gehäuse (104) relativ zu dem Basisgehäuse (102) von der ersten Betriebskonfiguration zu der zweiten Betriebskonfiguration und umgekehrt bewegt und relativ zu dem Basisgehäuse (102) von der ersten Betriebskonfiguration zu der dritten Betriebskonfiguration und umgekehrt schwenkt, wobei der Führungsmechanismus (760) auch ausgebildet ist, zu verhindern, dass sich das bewegbare Gehäuse (104) direkt aus der zweiten Betriebskonfiguration in die dritte Betriebskonfiguration und umgekehrt bewegt.

6. Die elektronische mobile Vorrichtung gemäß Anspruch 5, wobei der Führungsmechanismus (760) einen Schlitz (762) umfasst, der durch das Basisgehäuse (102) definiert wird, und einen Stift (764), der durch das bewegbare Gehäuse (104) unterstützt wird und ausgebildet ist, sich in dem Schlitz (762) zu bewegen, wenn sich das bewegbare Gehäuse (104) relativ zu dem Basisgehäuse (102) bewegt und schwenkt.

7. Die elektronische mobile Vorrichtung gemäß Anspruch 6, wobei der Schlitz (762) einen linearen Abschnitt (766) umfasst, in dem der Stift (764) ausgebildet ist, sich zu bewegen, wenn sich das bewegbare Gehäuse (104) relativ zu dem Basisgehäuse (102) bewegt, und einen bogenförmigen Abschnitt (768), in dem der Stift (764) ausgebildet ist, sich zu bewegen, wenn das bewegbare Gehäuse (104) relativ zu dem Basisgehäuse (102) schwenkt.

8. Die elektronische mobile Vorrichtung gemäß Anspruch 1, die weiter aufweist:

einen Schwenkmechanismus (210), der ausgebildet ist, ein Schwenken des bewegbaren Gehäuses (104) um die Schwenkachse (242) zu erleichtern;
einen Gleitmechanismus (208), der ausgebildet ist, eine Bewegung des bewegbaren Gehäuses (104) relativ zu dem Basisgehäuse (102) entlang der Längsebene (244) zu erleichtern, wobei der Gleitmechanismus (208) umfasst:

eine Gleitvertiefung (522), die von dem Basisgehäuse (102) definiert wird; und
einen Schieber (526), der ausgebildet ist, in der Gleitvertiefung (522) bewegt zu werden, wenn sich das bewegbare Gehäuse (104) relativ zu dem Basisgehäuse (102) bewegt, wobei der Schieber (526) eine Schieber-Vertiefung (536) umfasst, die den Schwenkmechanismus (210) aufnimmt.

9. Die elektronische mobile Vorrichtung gemäß Anspruch 1, wobei das bewegbare Gehäuse (104) ausgebildet ist zum Schwenken um 90° in der dritten Betriebskonfiguration relativ zu der ersten Betriebskonfiguration und der zweiten Betriebskonfiguration.

**Revendications**

1. Dispositif électronique mobile, comprenant :

un boîtier de base (102) ;
un boîtier mobile (104) supporté de manière mobile par le boîtier de base (102) et comprenant un écran d'affichage (106), l'écran d'affichage (106) définissant :

un plan d'interface (248) ;
un plan longitudinal (244) substantiellement perpendiculaire au plan d'interface (248) et coupant l'écran d'affichage (106) en deux parties égales ;
un plan transversal (246) substantiellement perpendiculaire au plan d'interface (248) et au plan longitudinal (244) et coupant l'écran d'affichage (106) en deux parties égales ;

un ensemble de touches (114) supporté par le boîtier de base (102) ;
dans lequel le boîtier mobile (104) peut fonctionner dans une première configuration de fonctionnement, le boîtier mobile (104) peut effectuer un mouvement de translation par rapport au boîtier de base (102) dans le plan longitudinal (244) afin de se déplacer depuis et vers une deuxième configuration de fonctionnement et le boîtier mobile (104) peut pivoter par rapport au boîtier de base (102) autour d'un axe de pivotement (242) afin de se déplacer depuis et vers une troisième configuration de fonctionnement et l'axe de pivotement (242) est décalé tout en étant substantiellement parallèle avec à la fois le plan longitudinal (244) et le plan transversal (246) ;
dans lequel une partie de l'écran d'affichage (106) est conçue pour être disposée entre le boîtier de base (102) et l'ensemble de touches (114) et se trouve ainsi masquée dans la première configuration de fonctionnement ;
dans lequel l'axe de pivotement (242) est décalé par rapport au plan longitudinal (244) d'une distance de décalage transversal (250) et par rapport au plan transversal (246) d'un distance de décalage longitudinal (252) et la distance de décalage transversal (250) et la distance de décalage longitudinal (252) sont substantiellement égales ;
dans lequel l'écran d'affichage (106) possède une largeur substantiellement perpendiculaire au plan longitudinal (244), l'ensemble de touches (114) possède une arête proximale (229) qui est la plus proche de l'axe de pivotement (242), une distance entre l'arête proximale (229) et le plan transversal (246) est une distance de décalage de l'ensemble de touches (253) et la distance de décalage transversal (250) et la distance de décalage longitudinal (252) sont définies par l'inégalité

$$d_s \geq \frac{w}{4} - \frac{d_k}{2}$$

où $d_s$ est la distance de décalage transversal (250) et la distance de décalage longitudinal (252), w est la largeur de l'écran d'affichage et $d_k$ est la distance de décalage de l'ensemble de touches (253).

2. Dispositif électronique mobile selon la revendication 1, dans lequel la partie de l'écran d'affichage n'est pas en mesure de fonctionner dans la première configuration de fonctionnement.

3. Dispositif électronique mobile selon la revendication 1, comprenant en outre un mécanisme de précontrainte (228) conçu pour précontraindre le boîtier mobile (104) en direction de la deuxième configuration de fonctionnement.

4. Dispositif électronique mobile selon la revendication 3, dans laquelle le boîtier mobile (104) est conçu pour passer d'une première plage de déplacement à une deuxième plage de déplacement lorsqu'il se déplace entre la première configuration de fonctionnement et la deuxième configuration de fonctionnement et le mécanisme de précontrainte (228) est conçu pour précontraindre le boîtier mobile (104) en destination de la première configuration de fonctionnement dans la première plage de déplacement et en direction de la deuxième configuration de fonctionnement dans la deuxième plage de déplacement.

5. Dispositif électronique mobile selon la revendication 1, comprenant en outre un mécanisme de guidage (760) conçu pour permettre au boîtier mobile (104) d'effectuer une translation par rapport au boîtier de base (102) entre la première configuration de fonctionnement et la deuxième configuration de fonctionnement, et vice-versa, et de pivoter par rapport au boîtier de base (102) entre la première configuration de fonctionnement et la troisième configuration de fonctionnement, et vice-versa, le mécanisme de guidage (760) étant également conçu pour empêcher le boîtier mobile (104) de se déplacer directement de la deuxième configuration de fonctionnement vers la troisième configuration de fonctionnement, et vice-versa.

6. Dispositif électronique mobile selon la revendication 5, dans lequel le mécanisme de guidage (760) comprend une encoche (762) définie par le boîtier de base (102) et un tourillon (764) porté par le boîtier mobile (104) et conçu pour se déplacer dans l'encoche (762) lorsque le boîtier mobile (104) se déplace et pivote par rapport au boîtier de base (102).

7. Dispositif électronique mobile selon la revendication 6, dans lequel l'encoche (762) comprend une partie linéaire (766) dans laquelle le tourillon (764) est conçu pour se déplacer lorsque le boîtier mobile (104) effectue une translation par rapport au boîtier de base (102) et une partie en arc de cercle (768) dans laquelle le tourillon (764) est conçu pour se déplacer lorsque le boîtier mobile (104) pivote par rapport au boîtier de base (102).

8. Dispositif électronique mobile selon la revendication 1, comprenant en outre :

   un mécanisme de pivotement (210) conçu pour faciliter le pivotement du boîtier mobile (104) autour de l'axe de pivotement (242) ;
   un mécanisme de coulissement (208) conçu pour faciliter la translation du boîtier mobile (104) par rapport au boîtier de base (102) dans le plan longitudinal (244), le mécanisme de coulissement (208) comprenant :

      un décrochement de coulissement (522) défini par le boîtier de base (102) ; et

   un coulisseau (526) conçu pour se déplacer dans le décrochement de coulissement (522) lorsque le boîtier mobile (104) effectue un mouvement de translation par rapport au boîtier de base (102), le coulisseau (526) comprenant un décrochement du coulisseau (536) pour loger le mécanisme de pivotement (210).

9. Dispositif électronique mobile selon la revendication 1, dans lequel le boîtier mobile (104) est conçu pour pivoter de 90 degrés dans la troisième configuration de fonctionnement, par rapport à la première configuration de fonctionnement et à la deuxième configuration de fonctionnement.

FIG. 1

FIG. 4

FIG. 3

FIG. 2

FIG. 5

FIG. 6A   FIG. 6B   FIG. 6C   FIG. 6D   FIG. 6E

EP 2 413 571 B1

FIG. 7

FIG. 8A          FIG. 8B          FIG. 8C

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008250826 A
- EP 1914962 A
- EP 1926291 A
- WO 2010024086 A
- US 2009036179 A
- WO 2008108594 A
- US 6219694 B